# EUROPEAN PATENT SPECIFICATION

(11) **EP 2 957 432 B1**
(45) Date of publication and mention of the grant of the patent: **31.01.2018**
(21) Application number: 15172136.2
(22) Date of filing: 15.06.2015
(51) Int. Cl.: B60B 27/00, F16C 35/073, F16C 33/60

(54) **HUB-BEARING HAVING A LIGHT ALLOY ROTOR-HUB**
NABENLAGER MIT EINER LEICHTMETALLLEGIERUNGS-ROTORNABE
PALIER DE MOYEU COMPORTANT UN MOYEU DE ROTOR EN ALLIAGE LÉGER

(30) Priority: 20.06.2014 IT TO20140495
(43) Date of publication of application: 23.12.2015
(73) Proprietor: Aktiebolaget SKF, 415 50 Göteborg (SE)
(72) Inventor: BOSCO, Domenico, 10071 Borgaro Torinese (IT); SGUOTTI, Laura, 10064 Pinerolo (IT)
(74) Representative: Tedeschini, Luca

(56) References cited:
- WO-A1-2005/030499
- WO-A1-2013/161880
- DE-A1- 3 400 701
- DE-A1- 10 128 073
- DE-A1-102008 051 601
- US-A- 5 486 053
- US-A- 5 813 938

## Description

### Technical field

The present invention relates to a hub-bearing assembly comprising a light alloy hub, configured as a rotor. This assembly is suitable for applications where the bearing inner ring is rotatable, in other words, for applications to a driving wheel of a motor vehicle .

### Background art

To the state of the art hub-bearing assemblies of the flanged type for application to driving wheels of a motor vehicle are already known. An example is described in European patent EP 1031439 B1 and comprises a radially outer ring, a pair of radially inner rings and a double row of rolling elements (in this application, spheres) radially interposed between the outer ring and the pair of inner rings. The outer ring has a cylindrical external surface adapted to be forced with interference to insert the bearing in a cylindrical seat formed in the knuckle of a suspension. The radially inner rings are mounted on a steel flanged hub, rotationally coupled in a known way to the end portion of a spindle or an axle shaft of the transmission unit of a motor vehicle.

The flanged hub has a flange portion in which are formed the holes for a plurality of fastening means (for example, stud bolts) that connect in a known way an element of the wheel of the motor vehicle, for example the brake disc, to the flanged hub.

Such an embodiment requires that the flange portion of the flanged hub has high mechanical resistance characteristics. This implies that the flanged hub are made of high-strength material (steel, in the cited prior art), in order to limit the thickness and therefore the overall dimensions of the flanged portion. Alternatively, the flanged hub can be realized with a high thickness of the flanged portion, thus penalizing the overall axial dimensions, if they are made of lighter but also less resistant materials, for example aluminum or other light alloy. Therefore, the known solutions have the drawback of not allowing to obtain a flanged hub that is both lightweight and has small dimensions.

Document WO 2005/030499 A1 relates to a mechanical system comprising at least two parts, where these parts are moveable relative to each other. The system comprises at least one non contacting power and data coupling device for transferring data between the first part and the second part. The type of power and data coupling device can be inductive, capacitive, radiographic and a combination of these.

Document DE 3400701 A1 discloses a ring gear which is rotatably mounted in a rear axle transmission of a motorcycle and is integrally provided with a conical extension. The conical inner surface of a cone ring is driven onto the extension by means of attachment; at the same time, the outer cylindrical surface of the cone ring widens radially and is pressed against the wall of a receiving bore of a brake disc carrier.

Document US 5813938 A relates to a wheel mounting hub system includes a hollow stationary hub carrier with an inner surface and a rotating hub located radially within the stationary hub carrier throughout at least a portion of its axial length. Axially spaced annular roller bearings are located between the rotating hub and the inner surface of the stationary hub. Outer bearing races for the roller bearings are formed on the inner surface of the stationary hub carrier and inner bearing races are located on the outer surface of the rotating hub.

### Invention summary

Aim of the present invention is to realize a hub-bearing assembly for a driving wheel of a motor vehicle, which overcomes the above mentioned inconveniences; in particular, purpose of the invention is to define a flanged hub made of light alloy and having reduced overall dimensions.

According to the present invention, a hub-bearing assembly is described, the hub-bearing assembly having the characteristics as in the enclosed independent claim.

Further embodiments of the invention, preferred and/or particularly advantageous, are described according to the characteristics as in the enclosed dependent claims.

### Brief description of the drawings

The invention will be now described by reference to the enclosed drawings, which show some non-limitative embodiments, namely:
- Figure 1 is an axial-symmetrical section of the hub-bearing assembly, according to a preferred embodiment of the present invention,
- Figure 2 is an axial-symmetrical section of the hub-bearing assembly, showing a second embodiment of the invention,
- Figure 3 is an axial-symmetrical section of the hub-bearing assembly, showing a third embodiment of the invention.

### Detailed description

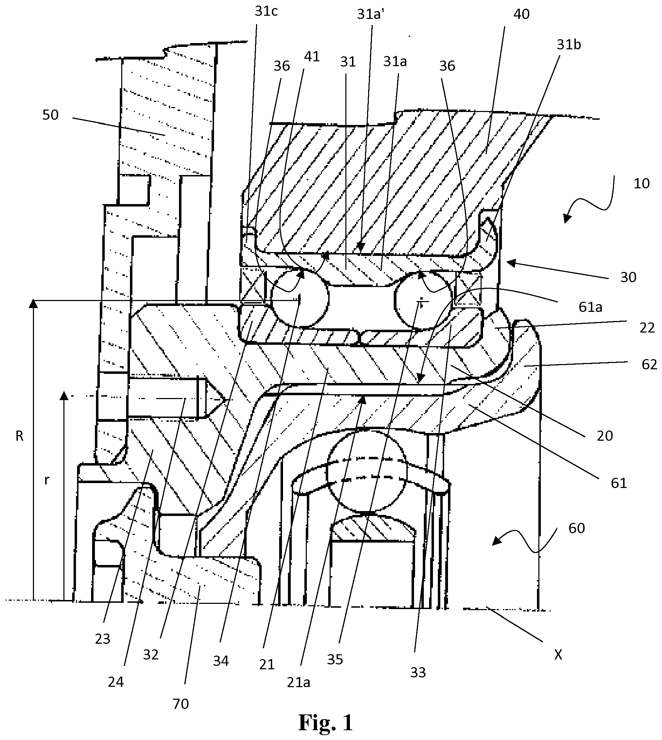

With reference to Figure 1, a hub-bearing according to a first embodiment of the invention, is referenced as a whole with 10.

The assembly 10 comprises a hub 20 and a bearing unit 30. Throughout the present description and in the claims, the terms and expressions indicating positions and orientations such as "radial" and "axial" are to be taken to refer to the axis of rotation x of the bearing unit 30. Instead, expressions as "axially external" and "axially internal" are to be referred to the assembled condition, in this case respectively to a motor vehicle wheel side and to an opposite side.

The bearing unit 30 comprises a radially outer ring 31, stationary, a pair of radially inner rings 32, 33, rotatable, and a double set of rolling elements 34, 35, in this example spheres, interposed between the outer ring 31 and the inner rings 32, 33.

The stationary outer ring 31 has a tubular main portion 31a axially extending, which internally defines the raceways 36 of the rolling elements 34, 35.

The outer ring 31 and in particular the tubular portion 31a has a radially external cylindrical surface 31a' adapted to be coupled with a cylindrical seat 41 formed in a knuckle 40 of a suspension. The cylindrical surface 31a' extends for the entire axial dimension of the outer ring 31 and has an axial dimension of the order of magnitude of the dimension of the knuckle cylindrical seat 41. The two axially opposite ends of the cylindrical surface 31a' are presented by respective axial opposite ends of the tubular projections 31b, 31c, that extend from the tubular portion 31a. The tubular projections 31b, 31c are shaped and dimensioned to be machined or to be plastically cold formed, preferably by rolling operations, in the radially outward direction so as to assume the configuration illustrated in the drawing. Preferably, the tubular projection 31b is obtained by machining before the assembly of the radially outer ring 31 on the knuckle 40, thus realizing a shoulder for the knuckle. The tubular projection 31c is obtained, after mounting the knuckle, by cold plastic forming (in particular, by riveting or other similar operation), so as to ensure the stable coupling between the knuckle and the radially outer ring. Alternatively, it is possible to perform machining to obtain the tubular projection 31c and plastic deformation to obtain the tubular projection 31b.

Preferably, the radially inner rings 32, 33 have an overall axial dimension of the same order of magnitude of the axial thickness of the knuckle 40.

The rolling elements 34, 35 rotate on the rolling rings, in particular also on the radially inner rings 32, 33, which are mounted on a flanged hub 20 shaped as a rotor and made of aluminum or other light alloy.

The hub 20 has a central tubular portion 21, which is steadily connected with a rolled edge 22, axially internal, and an axially outer flange portion 23. The flange portion has a plurality of axial fixing holes 24 the axes of which are arranged along a circle of radius r, with respect to the symmetry axis X. The holes are seats for corresponding fastening means (such as stud bolts, not shown in the figure) that connect in a known way an element of the wheel of the motor vehicle, for example the brake disc 50, to the flanged hub 20.

The flanged hub 20, made of aluminum or other light alloy, is realized in such a way that its radial extension does not exceed the radius R of the circle comprising the centers of the rolling elements 34, 35. More precisely, it is required that the radius r of the circle of the axes of the mounting holes 24 is smaller than the radius R of the circle of the centers of the rolling elements 34, 35 or at least the centers of the rolling elements 34, axially external and closest to the brake disc of the wheel of the motor vehicle.

Through this solution, the flanged hub assumes a shape as a rotor, in other words, its flange portion is very reduced and, in particular, does not radially extend beyond the diameter of the centers of the rolling elements. This allows to realize the hub 20 in a light alloy, for example aluminum, although the hub itself can withstand the loads transmitted by the wheel of the motor vehicle. The above solution is obtained by increasing the radius R of the circle of the centers of the rolling elements and obviously not varying (since it is a constraint of the project of the motor vehicle) the radius r of the circle of the axes of the fixing holes 24.

The axial preload to the pair of inner rings 32, 33 is guaranteed by the rolled edge 22 of the hub.

The transmission of the motion from a drive shaft of the transmission unit of a motor vehicle (not shown) is guaranteed by the angular coupling of the hub 20 with a constant velocity joint 60.

Having increased the radius R of the circle of the centers of the rolling elements, the constant velocity joint 60, and in particular its radially outer portion, or the bell 61, can be designed so as to be inserted in the space left free by the central rotor-hub. In this way, a very stiff unit is obtained, also compact in size and lightweight. A central screw element 70 ensures the axial connection between the constant velocity joint 60 and the hub 20. In the configuration of Fig. 1, the bell 61 has a preformed axially inner edge 62, configured to cooperate with the rolled edge 22 of the hub, thus making the whole unit even more robust.

The torque transmission between the constant velocity joint 60 and the hub 20 is realized by angularly coupling the bell 61 to the hub 20, by means of the knurled coupling between the radially outer cylindrical surface 61a of the bell and the radially inner cylindrical surface 21a of the hub.

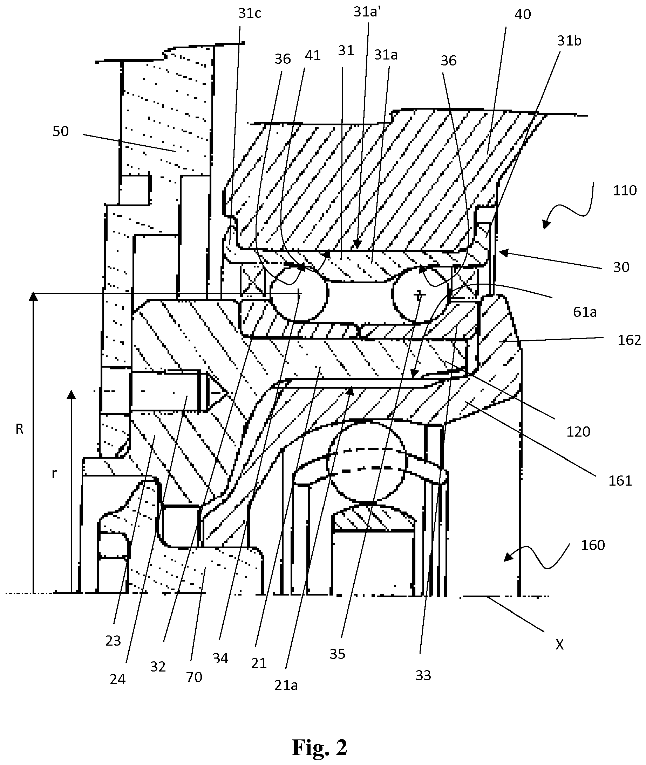

In Figure 2 is shown a second embodiment of the present invention, where the hub-bearing assembly is referred as 110. Compared to the previous embodiment, this embodiment differs in that the hub 120 is devoid of the axially inner rolled edge. Therefore, in this solution the axial preload to the inner rings 32, 33 is guaranteed by the preformed edge 162 of the bell 161 of the constant velocity joint 160. Further aspects of this solution coincide with what has been described regarding the first embodiment.

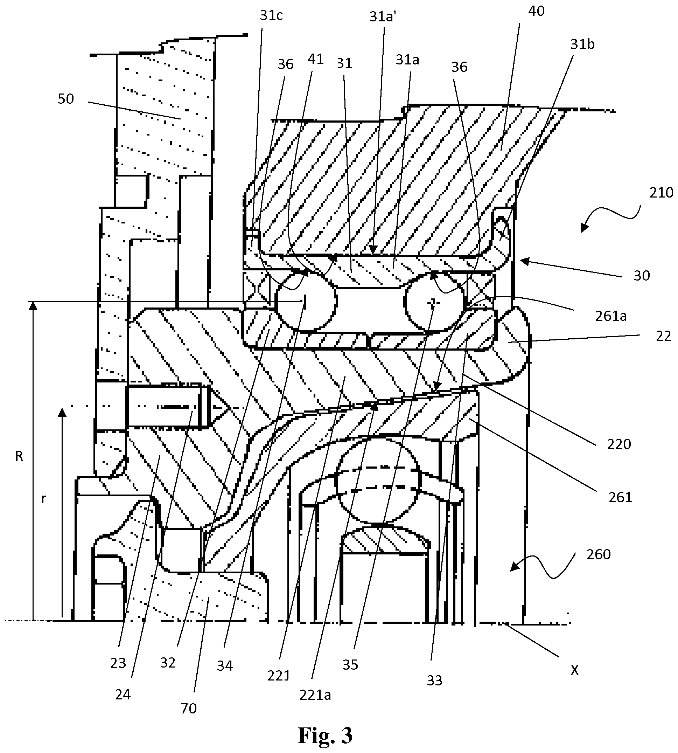

In Figure 3, a third embodiment of the present invention is shown, where the hub bearing assembly is referred as 210. Compared to the solution of Fig. 1, in the present embodiment there are two different aspects. A first difference is the fact that the axial preload to the inner rings 32, 33 is guaranteed by the rolled edge 22 of the hub 220, as in the solution in Fig. 1, but in this case without the aid of the preformed edge of the bell. In fact, in the solution of Fig. 3, the bell 261 of the constant velocity joint 260 is devoid of preformed axially inner edge.

A second difference, compared to the first embodiment is that the transmission of torque between the constant velocity joint 260 and the hub 220 is accomplished by angularly coupling the bell 261 to the hub 220, by means of coupling between a radially outer conical surface 261a of the bell and a radially inner conical surface 221a of the tubular portion 221 of the hub 220.

Therefore, the solution created and declined in the presented embodiments allows to achieve a lightweight hub-bearing assembly, since only the bearing and the joint are made of steel while the hub is in light alloy. Moreover, the assembly has very limited axial dimensions, since the hub is almost devoid of flange portions and of the relative axial dimensions and the bell of the joint is positioned so as to be radially inside the bearing. As consequence of the increased radius of the centers of the rolling elements, a larger bearing diameter of the bearing also reduces the local loads between rings and rolling elements of the bearing. Finally, a larger diameter of the centers of the rolling elements of the bearing ensures greater resistance and durability.

Other than the embodiments of the invention, as above disclosed, it is to be understood that a vast number of variations exist. It should also be appreciated that the exemplary embodiment or exemplary embodiments are only examples and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

## Claims

1. A hub-bearing assembly (10, 110, 210) comprising:
- a bearing unit (30) comprising a radially outer ring (31), stationary, a couple of radially inner rings (32, 33), rotatable, and a double row of rolling elements (34, 35), which are interposed between the radially outer ring and the radially inner rings, whose centers are located along a first circle having a radius (R), with respect to a symmetry axis (X) of the hub-bearing assembly (10, 110, 210),
- a rotor-hub (20, 120, 220), rotatable and made of a light alloy, on top of which the radially inner rings (32, 33) are assembled, the rotor-hub comprising a tubular portion (21, 221), to which is steadily fixed a flange portion, axially external and provided with a plurality of fixing holes (24), whose axes are located along a second circle having a radius (r), with respect to the symmetry axis (X) of the hub-bearing assembly (10, 110, 210), and said fixing holes (24) are seat of corresponding fastening means, engaging a wheel component of a motor vehicle to the rotor-hub (20, 120, 220),
wherein
- the radius (R) of the first circle of the rolling elements (34, 35) centers is greater than the radius (r) of the second circle of the fixing holes (24) axes,
**characterized in that**
the rotor-hub (20, 120, 220) is angularly coupled to a bell (61, 161, 261) of a constant velocity joint (60, 160, 260), from which the rotor-hub receives the driving torque and **characterized in that** the bell (61, 161, 261) is the radially outer portion of the constant velocity joint (60, 160, 260) and is co-axial and radially internal to rotor-hub (20, 120, 220).

2. Hub-bearing assembly according to claim 1, **characterized in that** the rotor-hub (20, 120) and the bell (61, 161) are angularly coupled by means of a milled coupling between a radially external cylindrical surface (61a) of the bell (61, 161) and a radially internal cylindrical surface (21a) of the tubular portion (21) of the rotor-hub (20, 120).

3. Hub-bearing assembly according to claim 1, **characterized in that** the rotor-hub (220) and the bell (261) are angularly coupled by means of a coupling between a radially external conical surface (261a) of the bell (261) and a radially internal conical surface (221a) of the tubular portion (221) of the rotor-hub (220).

4. Hub-bearing assembly according to any of the preceding claims, **characterized in that** the tubular portion (21, 221) of the rotor-hub (20, 120, 220) is steadily fixed to a rolled edge (22), which is axially internal and configured to axially pre-load the couple of radially inner rings (32, 33).

5. Hub-bearing assembly according to claim 4, **characterized in that** the bell (61) comprises a pre-formed edge (62), which is axially internal and configured to cooperate with the rolled edge (22) to axially pre-load the couple of radially inner rings (32, 33).

6. Hub-bearing assembly according to any of the claims from 1 to 3, **characterized in that** the bell (161) comprises a pre-formed edge (162), which is axially internal and configured to axially pre-load the couple of radially inner rings (32, 33).

7. Hub-bearing assembly according to any of the preceding claims, **characterized in that** a tubular portion (31a) of the outer ring (31) comprises a cylindrical surface (31a'), which is radially external and configured to be coupled to a cylindrical seat (41) of a knuckle (40) of a vehicle suspension.

## Patentansprüche

1. Nabenlageranordnung (10, 110, 210), umfassend:
- eine Lagereinheit (30), die einen radial äußeren feststehenden Ring (31), eine Reihe von radial inneren drehbaren Ringen (32, 33) und eine Doppelreihe von Wälzkörpern (34, 35) umfasst, die zwischen dem radial äußeren Ring und den radial inneren Ringen angeordnet sind und deren Mittelpunkte entlang eines ersten Kreises mit einem Radius (R) in Bezug auf eine Symmetrieachse (X) der Nabenlageranordnung (10, 110, 210) gelegen sind,
- eine drehbare Rotornabe (20, 120, 220), die aus einer Leichtmetalllegierung besteht und auf deren Oberseite die radial inneren Ringe (32, 33) montiert sind, wobei die Rotornabe einen röhrenförmigen Abschnitt (21, 221) umfasst, an dem ein Flanschabschnitt befestigt ist, der axial außen gelegen und mit einer Vielzahl von Befestigungslöchern (24) versehen ist, deren Achsen entlang eines zweiten Kreises mit einem Radius (r) in Bezug auf die Symmetrieachse (X) der Nabenlageranordnung (10, 110, 210) gelegen sind, wobei die Befestigungslöcher (24) den Sitz entsprechender Befestigungsmittel bilden, die eine Radkomponente eines Kraftfahrzeugs mit der Rotornabe (20, 120, 220) in Eingriff bringen,
wobei
- der Radius (R) des ersten Kreises der Mittelpunkte der Wälzkörper (34, 35) größer als der Radius (r) des zweiten Kreises der Achsen der Befestigungslöcher (24) ist,
**dadurch gekennzeichnet, dass**
die Rotornabe (20, 120, 220) winkelförmig an eine Glocke (61, 161, 261) eines Gleichlaufgelenks (60, 160, 260) gekoppelt ist, von dem die Rotornabe das Antriebsmoment aufnimmt, und **dadurch gekennzeichnet, dass** die Glocke (61, 161, 261) den radial äußeren Abschnitt des Gleichlaufgelenks (60, 160, 260) bildet und koaxial und radial innen zu der Rotornabe (20, 120, 220) gelegen ist.

2. Nabenlageranordnung nach Anspruch 1, **dadurch gekennzeichnet, dass** die Rotornabe (20, 120) und die Glocke (61, 161) mittels einer gefrästen Kupplung zwischen einer radial äußeren zylindrischen Fläche (61a) der Glocke (61, 161) und einer radial inneren zylindrischen Fläche (21a) des röhrenförmigen Abschnitts (21) der Rotornabe (20, 120) winkelförmig gekoppelt sind.

3. Nabenlageranordnung nach Anspruch 1, **dadurch gekennzeichnet, dass** die Rotornabe (220) und die Glocke (261) mittels einer Kupplung zwischen einer radial äußeren konischen Fläche (261a) der Glocke (261) und einer radial inneren konischen Fläche (221a) des röhrenförmigen Abschnitts (221) der Rotornabe (220) winkelförmig gekoppelt sind.

4. Nabenlageranordnung nach einem der vorhergehenden Ansprüche, **dadurch gekennzeichnet, dass** der röhrenförmige Abschnitt (21, 221) der Rotornabe (20, 120, 220) dauerhaft an einer Wälzkante (22) befestigt ist, die axial innen gelegen und dazu ausgelegt ist, die Reihe von radial inneren Ringen (32, 33) axial vorzubelasten.

5. Nabenlageranordnung nach Anspruch 4, **dadurch gekennzeichnet, dass** die Glocke (61) eine vorgeformte Kante (62) umfasst, die axial innen gelegen und dazu ausgelegt ist, mit der Wälzkante (22) zusammenzuwirken, um die Reihe von radial inneren Ringen (32, 33) axial vorzubelasten.

6. Nabenlageranordnung nach einem der Ansprüche 1 bis 3, **dadurch gekennzeichnet, dass** die Glocke (161) eine vorgeformte Kante (162) umfasst, die axial innen gelegen und dazu ausgelegt ist, die Reihe von radial inneren Ringen (32, 33) axial vorzubelasten.

7. Nabenlageranordnung nach einem der vorhergehenden Ansprüche, **dadurch gekennzeichnet, dass** ein röhrenförmiger Abschnitt (31a) des äußeren Rings (31) eine zylindrische Fläche (31a') umfasst, die radial außen gelegen und dazu ausgelegt ist, an einen zylindrischen Sitz (41) eines Scharniergelenks (40) einer Fahrzeugaufhängung gekoppelt zu werden.

## Revendications

1. Ensemble de palier de moyeu (10, 110, 210), comprenant :
- une unité de palier (30) comprenant une bague radialement extérieure (31), stationnaire, une paire de bagues radialement intérieures (32, 33), rotatives, et une double rangée d'éléments de roulement (34, 35), qui sont interposés entre la bague radialement extérieure et les bagues radialement intérieures, dont les centres sont situés le long d'un premier cercle ayant un rayon (R), par rapport à un axe de symétrie (X) de l'ensemble de palier de moyeu (10, 110, 210),
- un moyeu de rotor (20, 120, 220), rotatif et fabriqué en un alliage léger, sur le dessus duquel sont assemblées les bagues radialement intérieures (32, 33), le moyeu de rotor comprenant une partie tubulaire (21, 221) à laquelle est fixée de manière stable une partie de bride, axialement extérieure et pourvue d'une pluralité de trous de fixation (24), dont les axes sont situés le long d'un deuxième cercle ayant un rayon (r), par rapport à l'axe de symétrie (X) de l'ensemble de palier de moyeu (10, 110, 210), et lesdits trous de fixation (24) constituant le siège de moyens d'attache correspondants, mettant en prise un composant de roue d'un véhicule à moteur avec le moyeu de rotor (20, 120, 220),
- le rayon (R) du premier cercle des centres des éléments de roulement (34, 35) étant supérieur au rayon (r) du second cercle des axes des trous de fixation (24),
**caractérisé en ce que**
le moyeu de rotor (20, 120, 220) est accouplé angulairement à une cloche (61, 161, 261) d'un joint homocinétique (60, 160, 260), duquel le moyeu de rotor reçoit le couple d'entraînement, et **caractérisé en ce que** la cloche (61, 161, 261) est la partie radialement extérieure du joint homocinétique (60, 160, 260) et est coaxiale et radialement interne par rapport au moyeu de rotor (20, 120, 220).

2. Ensemble de palier de moyeu selon la revendication 1, **caractérisé en ce que** le moyeu de rotor (20, 120) et la cloche (61, 161) sont accouplés angulairement au moyen d'un accouplement fraisé entre une surface cylindrique radialement extérieure (61a) de la cloche (61, 161) et une surface cylindrique radialement intérieure (21a) de la partie tubulaire (21) du moyeu de rotor (20, 120).

3. Ensemble de palier de moyeu selon la revendication 1, **caractérisé en ce que** le moyeu de rotor (220) et la cloche (261) sont accouplés angulairement au moyen d'un accouplement entre une surface conique radialement extérieure (261a) de la cloche (261) et une surface conique radialement intérieure (221a) de la partie tubulaire (221) du moyeu de rotor (220).

4. Ensemble de palier de moyeu selon l'une quelconque des revendications précédentes, **caractérisé en ce que** la partie tubulaire (21, 221) du moyeu de rotor (20, 120, 220) est fixée de manière stable à un bord roulé (22), qui est axialement intérieur et qui est configuré pour précontraindre axialement la paire de bagues radialement intérieures (32, 33).

5. Ensemble de palier de moyeu selon la revendication 4, **caractérisé en ce que** la cloche (61) comprend un bord préformé (62) qui est axialement intérieur et qui est configuré pour coopérer avec le bord roulé (22) pour précontraindre axialement le couple de bagues radialement intérieures (32, 33).

6. Ensemble de palier de moyeu selon l'une quelconque des revendications 1 à 3, **caractérisé en ce que** la cloche (161) comprend un bord préformé (162) qui est axialement intérieur et qui est configuré pour précontraindre axialement la paire de bagues radialement intérieures (32, 33).

7. Ensemble de paliers de moyeu selon l'une quelconque des revendications précédentes, **caractérisé en ce qu'**une partie tubulaire (31a) de la bague extérieure (31) comprend une surface cylindrique (31a'), qui est radialement extérieure et qui est configurée pour être accouplée à un siège cylindrique (41) d'une articulation (40) d'une suspension de véhicule.
